(19) Europäisches Patentamt
European Patent Office
Office européen des brevets

(11) Veröffentlichungsnummer: **0 005 301**
**B1**

(12) # EUROPÄISCHE PATENTSCHRIFT

(45) Veröffentlichungstag der Patentschrift: **21.10.81**

(51) Int. Cl.³: **B 01 D 53/34**, F 23 C 9/00

(21) Anmeldenummer: **79200210.7**

(22) Anmeldetag: **04.05.79**

(54) **Verfahren zum Entfernen von Schwefeloxiden aus chloridhaltigen Verbrennungsabgasen.**

(30) Priorität: **10.05.78 DE 2820357**

(43) Veröffentlichungstag der Anmeldung: **14.11.79 (Patentblatt 79/23)**

(45) Bekanntmachung des Hinweises auf die Patenterteilung: **21.10.81 Patentblatt 81/42**

(84) Benannte Vertragsstaaten: **DE FR GB IT**

(56) Entgegenhaltungen:
**DE - A - 2 159 186**
**DE - A - 2 215 065**
**DE - A - 2 244 140**
**DE - A - 2 304 496**
**DE - A - 2 541 821**
**DE - A - 2 721 878**
**DE - A - 2 725 436**
**FR - A - 1 452 088**
**FR - A - 2 385 435**
**GB - A - 826 221**
**US - A - 4 100 258**

(73) Patentinhaber: **METALLGESELLSCHAFT AG**
**Reuterweg 14 Postfach 3724**
**D-6000 Frankfurt/M.1 (DE)**

(72) Erfinder: **Voeste, Theodor, Dipl.-Chem.**
**Praunheimer Weg 90**
**D-6000 Frankfurt am Main (DE)**

(74) Vertreter: **Fischer, Ernst, Dr.**
**Reuterweg 14**
**D-6000 Frankfurt am Main 1 (DE)**

**EP 0 005 301 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

# Verfahren zum Entfernen von Schwefeloxiden aus chloridhaltigen Verbrennungsabgasen

Die Erfindung betrifft ein Verfahren zum Entfernen von Schwefeloxiden aus chloridhaltigem Verbrennungsabgas, insbesondere Kraftwerksabgas, durch Einsprühen einer überwiegend aus in Wasser gelöster Soda und/oder Natriumbikarbonat bestehenden Reinigungsflüssigkeit in eine vom Abgas durchströmte Reaktionszone, in welcher der Wassergehalt der Reinigungsflüssigkeit praktisch vollständig verdampft wird, wobei aus der Reaktionszone sowie einem vom Abgas anschließend durchströmten Filter praktisch wasserfreie Feststoffprodukte abgezogen werden, die zu mindestens 75 Gew.% aus Natriumsulfit, Natriumsulfat und Natriumchlorid bestehen.

Ein solches Verfahren ist aus DE-A-2 159 186 bekannt, allerdings bleibt dort ein Chloridgehalt im Abgas unerwähnt. Feststoffprodukte aus der Reinigungszone können wiederverwendet oder aber zu Ätznatron aufgearbeitet werden, welches sich für die Reinigungsflüssigkeit des bekannten Verfahrens ebenfalls eignet.

Aufgabe der Erfindung ist ein kostengünstiges Verfahren der eingangs genannten Art, bei dem die Weiterverarbeitung der bei der Abgasreinigung entstehenden Produkte möglichst einfach durchzuführen ist. Erfindungsgemäß wird dies dadurch erreicht, daß mindestens ein Teil der Feststoffprodukte gelöst, Sulfit im Kontakt mit sauerstoffhaltigem Gas zu Sulfat oxidiert und Karbonat entfernt wird, durch Zugabe von Calciumchlorid Calciumsulfat ausgefällt und abgetrennt und aus der zurückbleibenden Natriumchloridlösung Soda nach dem Solvay-Verfahren erzeugt und für die Reinigungsflüssigkeit wiederverwendet wird.

Bei diesem Verfahren ist es vorteilhaft, daß bei der Abgasreinigung kein Abwasser anfällt, welches sonst mit hohen Kosten gesammelt und aufbereitet werden müßte. Hinzu kommt, daß durch das Verfahren auch die im Abgas enthaltenen Chloride weitgehend aufgefangen werden.

Um die gewünschte Verdampfung des Wassergehalts der Reinigungsflüssigkeit in der Reaktionszone zu erreichen, ist es zweckmäßig, das Abgas mit einer Temperatur von mindestens 110 °C in die Reaktionszone zu leiten. Vorzugsweise verläßt das Abgas die Reaktionszone mit einer Temperatur von mindestens 65 °C, wobei es nicht mit Wasserdampf gesättigt ist. Eine anschließende Aufheizung des gereinigten Gases vor Einleiten in den Kamin kann deshalb zumeist unterbleiben.

Ist das Abgas zunächst sehr staubhaltig, empfiehlt es sich, die Reinigung mit einer Grobentstaubung zu beginnen. Diese Grobentstaubung braucht aber nicht besonders aufwendig gestaltet zu werden, da das Abgas auch noch mit einem Staubgehalt von 500 $mg/Nm^3$ in Kontakt mit der sodahaltigen Reinigungsflüssigkeit gebracht werden kann. Anschließend an die Reaktionszone wird das Abgas durch ein Filter geleitet, welches z.B. ein Elektrofilter oder ein textiles Filter sein kann. Bei Verwenden eines Elektrofilters ist es vorteilhaft, daß das Abgas aus der Reaktionszone erhebliche Mengen an Wasserdampf enthält, wodurch der Wirkungsgrad des Elektrofilters erhöht wird. Auch der nach der Grobentstaubung noch verbliebene Staub wird hier abgeschieden.

In der Reaktionszone und auch im nachgeschalteten Filter fallen praktisch wasserfreie Feststoffprodukte an, die zu mindestens 75 Gew.% aus $Na_2SO_3$, $Na_2SO_4$ und NaCl bestehen. Zusätzlich enthalten diese Feststoffprodukte auch noch Soda, welche in der Reaktionszone nicht umgesetzt wurde. Der Sodaanteil der Feststoffe kann bis zu 25 Gew.% betragen. Um eine günstige Ausnutzung auch dieses Sodagehalts zu erreichen, kann man Feststoffprodukte aus der Reaktionszone und/oder dem Filter direkt wieder für die Reinigungsflüssigkeit verwenden. Zur Herstellung der Reinigungsflüssigkeit löst man in diesem Falle einen Teil der Feststoffprodukte zusammen mit frischer Soda in Wasser und gibt sie der Reaktionszone wieder auf.

Ein wichtiger Teil des Verfahrens ist die Herstellung von Soda, die im Verfahren wieder verwendet werden kann. Als Ausgangsmaterial für die Sodaherstellung stehen die Feststoffprodukte mit ihrem Gehalt an $Na_2SO_3$, $Na_2SO_4$ und NaCl zur Verfügung. Diese Feststoffprodukte lösen sich in Wasser und können dann mit sauerstoffhaltigem Gas, z.B. Luft, das man durch die Lösung leitet, oxidiert werden, so daß Sulfit zu Sulfat umgewandelt wird. Gibt man zur oxidierten Lösung, die $Na_2SO_4$, NaCl und Soda enthält, eine genügend große Menge an $CaCl_2$, so fallen $CaCO_3$ und $CaSO_4$ aus, die man abtrennt. Die übrigbleibende NaCl-Lösung kann dann nach dem bekannten Solvay-Verfahren, auch Ammoniak-Soda-Verfahren genannt, in bekannter und technisch erprobter Weise zur Sodaherstellung benutzt werden.

Das Solvay-Verfahren arbeitet, kurz gefaßt, auf folgende Weise:

$$NaCl + CO_2 + NH_3 + H_2O \rightarrow NH_4Cl + NaHCO_3$$

Das ausfallende Natriumhydrogencarbonat wird durch Erhitzen im Calcinierofen auf 170 bis 180 °C in calcinierte Soda nach der Reaktionsgleichung

$$2\,NaHCO_3 \rightarrow Na_2CO_3 + H_2O + CO_2$$

überführt. Das freiwerdende $CO_2$ kann erneut in dem Verfahren eingesetzt werden, ebenso kann aus der Ammonchloridsole das Ammoniak durch Zugabe von gebranntem Kalk (CaO) wieder gewonnen werden. Beim Brennen des Kalkes wird gleichzeitig das für den Prozeß notwendige $CO_2$ gewonnen. Das Solvay-Verfahren benötigt zur Sodagewinnung nur die beiden Rohstoffe NaCl und Kalk. Als Endprodukte fallen die gewünschte Soda und, durch die Ammoniakrückgewinnung, eine Calciumchloridlösung an:

$$2\,NH_4Cl + CaO \rightarrow CaCl_2 + 2\,NH_3 + H_2O.$$

Neben der Soda ist in diesem Falle auch das Calciumchlorid ein erwünschtes Produkt, das beim vorausgehenden Verfahren der Umwandlung der Feststoffprodukte verwendbar ist.

Es ist auch möglich, im Rahmen des erfindungsgemäßen Verfahrens den Solvay-Prozeß so zu modifizieren, daß direkt Natriumsulfat für die Gewinnung des Natriumbicarbonats eingesetzt wird :

$$Na_2SO_4 + 2\ CO_2 + 2\ NH_3 + 2\ H_2O \rightarrow (NH_4)_2SO_4 + 2\ NaHCO_3.$$

Ammoniak gewinnt man zurück durch

$$(NH_4)_2SO_4 + CaO \rightarrow CaSO_4 + 2\ NH_3 + H_2O.$$

In der Zeichnung sind Möglichkeiten der Verfahrensführung schematisch dargestellt. Es zeigt :

Fig. 1 ein vollständiges Verfahrensschema und

Fig. 2 eine weitere Variante der Umwandlung der Feststoffprodukte aus der Abgasreinigung.

Im Verfahren der Fig. 1 wird das Staub und Schwefeloxide enthaltende Abgas mit einer Temperatur von mindestens 110 °C durch die Leitung in eine Reaktionszone geführt, die als Sprühadsorber 2 ausgestaltet ist. beim Adsorber 2 können dieselben Bauprinzipien wie bei einem Sprühtrockner verwendet werden. Durch die Leitung 3 mit dem Verteiler 4 wird als Reinigungsflüssigkeit eine Sodalösung in den Adsorber 2 gegeben und mit dem heißen Abgas in Kontakt gebracht.

Das Abgas verläßt den Sprühadsorber 2 mit einer Temperatur von mindestens 65 °C durch die Leitung 5 und gelangt zu einem Filter 6. Der Filter 6 kann z.B. eine bekannte Elektrofilteranlage sein. Das Abgas verläßt den Filter 6 durch die Leitung 7 und zieht über den Kamin 8 in die Atmosphäre ab.

Die Verhältnisse im Sprühadsorber 2 sind so aufeinander abgestimmt, daß durch das heiße Abgas praktisch der gesamte Wassergehalt der Reinigungsflüssigkeit verdampft und mit dem Abgas abgeführt wird. Im Adsorber 2 entstehen Feststoffprodukte, und zwar vor allem Natriumsulfit, Natriumsulfat und Natriumchlorid sowie unverbrauchte Soda. Diese Feststoffe sammeln sich teilweise im unteren Ende des Adsorbers 2 und werden dort durch die Leitung 9 abgezogen. Ein Teil der Feststoffe wird im Abgas mitgeführt und gelangt über die Leitung 5 zum Filter 6, wo sie aus dem Abgas entfernt werden. Die Feststoffprodukte verlassen das Filter 6 durch die Leitung 10 und werden zusammen mit den Feststoffen der Leitung 9 in der Leitung 11 zu einem Auffangbehälter A geführt.

Enthalten die Feststoffprodukte der Leitungen 9 und 10 noch erhebliche Mengen an Soda, so kann es für die Wirtschaftlichkeit des Verfahrens bedeutungsvoll sein, diese Feststoffprodukte mindestens zum Teil über die gestrichelt eingezeichneten Leitungen 9a, 10a, oder 11a direkt in den Vorratsbehälter 13 zu geben, in welchem die Reinigungsflüssigkeit hergestellt wird. Frische Soda wird diesem Vorratsbehälter in der Leitung 14 zugeführt.

Zwei Varianten der Aufarbeitung der Feststoffprodukte im Auffangbehälter A zur Gewinnung von Soda werden mit Hilfe des Verfahrensschemas der Fig. 1 erläutert.

Bei der ersten Variante werden die Feststoffprodukte durch die Leitung 15 in einen Behälter 16 gegeben und dort in Wasser aus der Leitung 17 gelöst und die Lösung mittels sauerstoffhaltigem Gas, z.B. Luft, das durch die Leitung 18 zugeführt wird, oxidiert. Bei dieser Oxidation wird das Sulfit in Sulfat umgewandelt.

Die oxidierte Lösung des Behälters 16, die vor allem noch $Na_2SO_4$, NaCl und $Na_2CO_3$ enthält, gelangt über die Leitung 19 in den Gipsfällungsbehälter 20, wo durch die Leitung 21 $CaCl_2$ zugegeben wird. Im Behälter 20 fallen $CaSO_4$ und $CaCO_3$ aus, die durch die Leitung 22 abgezogen und z.B. auf einer Deponie gelagert werden. Die übrigbleibende NaCl-Lösung wird durch die Leitung 23 einer Solvay-Anlage S zugeführt und dort in bekannter Weise zu Soda aufgearbeitet. In der Solvay-Anlage S fällt eine $CaCl_2$-Lösung an, die im Behälter 20 verwendet wird (Leitung 21). Soda aus der Solvay-Anlage S wird in der Leitung 14 oder durch ein geeignetes Transportmittel zum Vorratsbehälter 13 für die Reinigungsflüssigkeit gebracht.

Eine zweite Variante der Aufarbeitung der Feststoffprodukte des Behälters A kann ebenfalls mit der Verfahrensschaltung der Fig. 1 verwirklicht werden. Zu diesem Zweck wird in den Behälter 16 durch die Leitung 17 nicht Wasser, sondern verdünnte Schwefelsäure geleitet. Dadurch wird die restliche Soda zersetzt, wobei $CO_2$ entweicht und $Na_2SO_4$ zusätzlich entsteht. Bei dieser Umsetzung wird der pH-Wert im Behälter 16 im Bereich von 5-7 und vorzugsweise etwa bei 6 gehalten. Auch in diesem Falle ist die Sauerstoff-Begasung durch die Leitung 18 notwendig, um Sulfit zu Sulfat umzuwandeln. Im Gipsfällungsbehälter 20 fällt unter Zugabe von $CaCl_2$ aus Leitung 21 nun ziemlich reines $CaSO_4 \cdot 2\ H_2O$ aus, das man in der Leitung 22 abzieht. Der Gips kann aufgearbeitet und als Baustoff verwendet werden. Die übrigen Verfahrenseinzelheiten sind dieselben, die schon zusammen mit der ersten Verfahrensvariante erläutert wurden.

Eine dritte Variante der Aufarbeitung der Feststoffprodukte im Auffangbehälter A wird zusammen mit Fig. 2 erläutert. Die Feststoffprodukte gelangen durch die Leitung 15 in den Behälter 16, dem man durch die Leitung 17 Wasser zum Lösen der Feststoffe zugibt. Durch die Leitung 18 wird sauerstoffhaltiges Gas zum Oxidieren in der bereits erläuterten Weise eingeleitet.

In der Leitung 19 leitet man die Lösung, die Natriumsulfat, Natriumchlorid und restliche Soda enthält, in einen Kalkfällungsbehälter 25, wobei man der Lösung im Behälter 25 durch die Leitung 26 wenig $CaCl_2$ zugibt. Dadurch fällt durch die Reaktion $Na_2CO_3 + CaCl_2 = CaCO_3 + 2\ NaCl$ Calciumcarbonat aus, wogegen $Na_2SO_4$ gelöst bleibt. Calciumcarbonat wird aus dem Behälter 25 durch die Leitung 27

abgezogen und kann in der Solvay-Anlage S verwendet werden.

Die von Carbonat weitgehend befreite Lösung des Behälters 25 fließt in der Leitung 28 zum Gipsfällungsbehälter 20, dem in bereits erläuterter Weise durch die Leitung 21 $CaCl_2$ zugegeben und dabei $CaSO_4$ ausgefällt wird. Der weitere Verfahrensverlauf stimmt mit den bereits erläuterten Varianten überein.

Beispiel 1

In einem Kohlekraftwerk werden pro Stunde 250 t Kohle mit einem Schwefelgehalt von 1,2 Gew.-% verbraucht. Dabei entstehen $2{,}5 \cdot 10^6$ $Nm^3$ Abgas mit einer Temperatur von etwa 140 °C. Zur Grobentstaubung wird dieses Abgas zunächst durch ein erstes Elektrofilter geleitet, wobei etwa 25 t Staub anfallen. Das grob entstaubte Abgas enthält pro $Nm^3$ 2,4 g $SO_2$, 0,12 g Chloride und 0,25 g Staub. Es wird in einem Sprühadsorber 2 zum Entfernen der Schwefeloxide und Chloride behandelt, wobei man dem Adsorber zum Behandeln der gesamten Abgasmenge insgesamt 94 t Wasser mit 11 000 kg $Na_2Co_3$ zuführt. Das Abgas wird anschließend in einem Elektrofilter 6 entstaubt. Das gereinigte Abgas, das in der Leitung 7 das Elektrofilter verläßt, weist eine Temperatur von 75 °C auf und enthält noch pro $Nm^3$ 240 mg $SO_2$, 40 mg Chlorid und 40 mg Staub.

Im Sprühadsorber 2 und Elektrofilter 6 fallen zusammen insgesamt 8 505 kg $Na_2SO_3$, 2 396 kg $Na_2SO_4$, 327 kg NaCl, 1 757 kg $Na_2CO_3$ und 525 kg Staub als Feststoffprodukte an, die im Behälter A gesammelt werden.

Diese Feststoffprodukte werden unter Zugabe von 1 625 kg $H_2SO_4$ gelöst, wobei man im Behälter 16 zum Oxidieren insgesamt 1 080 kg $O_2$ aufwendet. Im Gipsfällungsbehälter 20 werden der Lösung aus dem Behälter 16 11 206 kg $CaCl_2$ zugegeben, wobei 14 512 kg Gips aus Natriumsulfat der Abgasreinigung und zusätzlich 2 852 Gips durch Zugabe von $H_2SO_4$ in den Behälter 16 ausfallen. Bei der Gipsabscheidung fallen also 17 364 kg Gips insgesamt an, die auch noch 525 kg Staub, 30 kg lösliche Salze und etwa 1 500 kg Wasser enthalten.

Durch die Leitung 23 wird zur Solvay-Anlage S eine Lösung mit insgesamt 12 138 kg NaCl geführt. In dieser Anlage werden 10 380 kg $CaCO_3$ verbraucht, wobei 11 000 kg $Na_2CO_3$ zum Wiederverwenden im Sprühadsorber 2 hergestellt werden.

Beispiel 2

Die Entstaubung und Entschwefelung wird zunächst wie im Beispiel 1 durchgeführt, wobei die selben Feststoffmengen im Behälter A anfallen. Diese Feststoffprodukte aus Behälter A werden im Verfahren gemäß Fig. 2 in Wasser gelöst, wobei man im Behälter 16 zum Oxidieren insgesamt 1 080 kg $O_2$ aufwendet. Im Kalkfällungsbehälter 25 werden dieser Lösung 1 760 kg $CaCl_2$ zugegeben, wobei 1 585 kg $CaCO_3$ ausfallen und zur Verwendung in der Solvay-Anlage S abgezogen werden.

Im Gipsfällungsbehälter 20 werden der Lösung aus dem Behälter 25 nochmals 9 446 kg $CaCl_2$ zugegeben, dabei fallen 14 512 kg $CaSO_4 \cdot 2\,H_2O$ sowie 73 kg $CaCO_3$ aus und werden abgetrennt. Durch die Leitung 23 wird eine Lösung gleicher Zusammensetzung wie im Beispiel 1 zur Solvay-Anlage S geführt, auch im übrigen wird weiter wie im Beispiel 1 verfahren.

**Ansprüche**

1. Verfahren zum Entfernen von Schwefeloxiden aus chloridhaltigen Verbrennungsabgas, insbesondere Kraftwerksabgas, durch Einsprühen einer überwiegend aus in Wasser gelöster Soda und/oder Natriumbikarbonat bestehenden Reinigungsflüssigkeit in eine vom Abgas durchströmte Reaktionszone, in welcher der Wassergehalt der Reinigungsflüssigkeit praktisch vollständig verdampft wird, wobei aus der Reaktionszone sowie einem vom Abgas anschließend durchströmten Filter praktisch wasserfreie Feststoffprodukte abgezogen werden, die zu mindestens 75 Gew.-% aus Natriumsulfit, Natriumsulfat und Natriumchlorid bestehen, dadurch gekennzeichnet, daß mindestens ein Teil der Feststoffprodukte gelöst, Sulfit im Kontakt mit sauerstoffhaltigem Gas zu Sulfat oxidiert und Karbonat entfernt wird, durch Zugabe von Calciumchlorid Calciumsulfat ausgefällt und abgetrennt und aus der zurückbleibenden Natriumchlorid-Lösung Soda nach dem Solvay-Verfahren erzeugt und für die Reinigungsflüssigkeit wiederverwendet wird.

2. Verfahren nach Anspruch 1, dadurch gekennzeichnet, daß man zum Entfernen von Karbonat den gelösten Feststoffprodukten Schwefelsäure bis zu einem pH-Wert von 5-7 zusetzt.

3. Verfahren nach Anspruch 1, dadurch gekennzeichnet, daß man zum Entfernen von Karbonat aus der wäßrigen Lösung der Feststoffprodukte mit wenig Calciumchlorid Calciumkarbonat ausfällt und abtrennt und anschließend die sulfathaltige Lösung mit weiterem Calciumchlorid umsetzt.

**Claims**

1. Process of removing sulfur oxides from chloride containing exhaust gas formed by combustion,

particularly from exhaust gas of a power plant, in which a purifying liquor predominantly consisting of an aqueous solution of sodium carbonate and/or bicarbonate is sprayed into a reaction zone flown through by the exhaust gas, in said zone the water content of the purifying liquor is virtually completely evaporated, virtually anhydrous solids containing at least 75 % by weight of sodium sulfite, sodium sulfate and sodium chloride are withdrawn from the reaction zone and from a filter which is flown through by the exhaust gas after the reaction zone, characterized in that at least part of the virtually anhydrous solids are dissolved, sulfite is oxidized to form sulfate in contact with oxygen-containing gas, carbonate is removed, by adding calcium chloride calcium sulfate is precipitated and separated, and sodium carbonate is recovered by the Solvay process from the remaining solution which contains sodium chloride.

2. Process according to Claim 1, characterized in that for removing of carbonate sulfuric acid is added to the dissolved solids to get a pH value in the range of 5-7.

3. Process according to Claim 1, characterized in that for removing of carbonate a small amount of calcium chloride is added to the solids dissolved in water, whereby calcium carbonate is precipitated and separated, and additional calcium chloride is added to the remaining solution containing sulfate.

**Revendications**

1. Procédé pour enlever des oxydes de soufre de gaz résiduaires de combustion chlorés, notamment de gaz résiduaires de centrales électriques, par projection d'un liquide de purification, constitué essentiellement de soude et/ou de bicarbonate de sodium dissous dans l'eau, dans une zone réactionnelle qui est traversée par le gaz résiduaire et dans laquelle la teneur en eau du liquide de purification s'évapore entièrement, qui consiste à soutirer de la zone réactionnelle ainsi que d'un filtre traversé ensuite par le gaz résiduaire des produits solides pratiquement anhydres et constitués pour au moins 75 % en poids de sulfite de sodium, de sulfate de sodium et de chlorure de sodium, caractérisé en ce qu'il consiste à dissoudre au moins une partie des produits solides, à oxyder le sulfite en sulfate par contact avec du gaz contenant de l'oxygène et à enlever le carbonate, à précipiter du sulfate de calcium par addition de chlorure de calcium et à le séparer et à obtenir par le procédé Solvay, de la solution de chlorure de sodium qui reste, de la soude que l'on réutilise comme liquide de purification.

2. Procédé suivant la revendication 1, caractérisé en ce qu'il consiste, pour enlever le carbonate, à ajouter au produit solide dissous de l'acide sulfurique jusqu'à obtention d'un pH de 5 à 7.

3. Procédé suivant la revendication 1, caractérisé en ce qu'il consiste, pour enlever le carbonate, à précipiter du carbonate de calcium par peu de chlorure de calcium dans la solution aqueuse des produits solides, à séparer ce carbonate de calcium et ensuite à faire réagir la solution contenant du sulfate sur un appoint de chlorure de calcium.

1/1

Fig.1

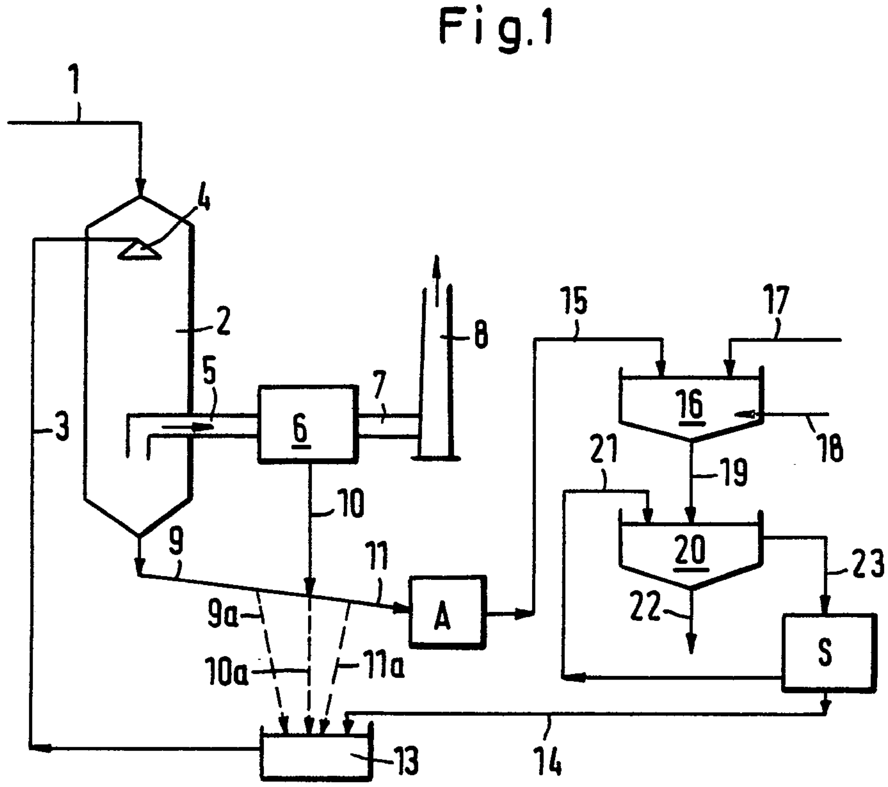
1
4
2
3
5
6
7
8
15
17
16
18
21
19
20
23
9
10
11
A
9a
10a
11a
22
S
13
14

Fig.2

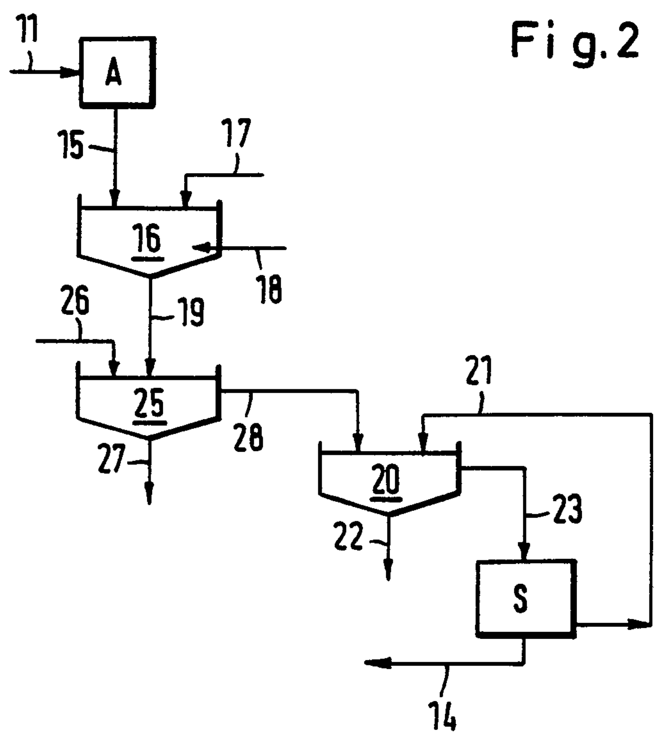
11
A
15
17
16
18
26
19
25
21
28
27
20
23
22
S
14